# EUROPEAN PATENT APPLICATION

(11) **EP 4 112 759 A1**
(43) Date of publication of application: **04.01.2023**
(21) Application number: 22160084.4
(22) Date of filing: 03.03.2022
(51) Int. Cl.: C22C 1/05, C22C 1/10, C22C 32/00, C22C 14/00, C22C 16/00, C22C 27/00, C22C 30/00

(54) **OXIDE DISPERSION STRENGTHENED REFRACTORY BASED ALLOY**

(30) Priority: 29.06.2021 US 202117361961
(71) Applicant: General Electric Company, Schenectady, NY 12345 (US)
(72) Inventor: DiDOMIZIO, Richard, Niskayuna, 12309 (US); DETOR, Andrew Joseph, Niskayuna, 12309 (US); RUUD, James Anthony, Niskayuna, 12309 (US); McLASKY, Christopher Thomas, Niskayuna, 12309 (US)
(74) Representative: Openshaw & Co.

(57) **Abstract**

An oxide dispersion strengthened refractory-based alloy is provided, along with methods of its formation and use. The oxide dispersion strengthened refractory-based alloy may include a refractory-based alloy comprising two or more refractory elements and forming a continuous phase; and a rare earth refractory oxide comprising at least one rare earth element and at least one of the two or more refractory elements. The rare earth refractory oxide forms discrete particles within the continuous phase, and the oxide dispersion strengthened refractory-based alloy comprises 0.1 volume % to 5 volume % of the rare earth refractory oxide.

## Description

### GOVERNMENT SUPPORT CLAUSE

This invention was made with government support under FA8650-20-C-7011 awarded by DARPA. The government has certain rights in the invention.

### FIELD

The present subject matter generally relates to oxide dispersion strengthened refractory-based alloys. For example, the oxide dispersion strengthened refractory-based alloys may have improved properties that may be particularly useful in high temperature structural applications.

### BACKGROUND

Oxide dispersion strengthened refractory-based alloys can be used in high temperature structural applications. For example, in an application involving hypersonic aircrafts, leading edge surfaces (e.g., the nose, engine cowls, and the leading edges of wings and stabilizers) may be subjected to very high heat load when operating in the hypersonic speed range (e.g., Mach 5 or greater) as the incident airflow passes through a bow shock and comes to rest at the vehicle surface, which converts the kinetic energy of the gas to internal energy and greatly increasing its temperature.

Improvements in materials and manufacturing techniques have enabled hypersonic aircraft to operate at higher speeds and temperatures. For example, materials have been developed to increase the temperatures that a component can withstand while maintaining its structural integrity. In this regard, for example, nickel-based superalloys might be used to 800°C, single-crystal materials might be used to 1200°C, and refractory metals may be required for even higher temperatures. In addition, various cooling technologies have been developed to provide cooling to the leading edges of hypersonic vehicles. However, corresponding advancements in vehicle speed and duration of high-speed flight times have created the need for further improvement in the high temperature durability of the leading edges of high- speed vehicles.

Accordingly, improved oxide dispersion strengthened refractory-based alloys are desired in the art for high temperature structural applications, including but not limited to improvements to hypersonic aircraft and propulsion technologies (e.g., improvements in materials of leading edges for hypersonic vehicles).

### BRIEF DESCRIPTION

Aspects and advantages of the invention will be set forth in part in the following description, or may be obvious from the description, or may be learned through practice of the invention.

An oxide dispersion strengthened refractory-based alloy is generally provided, along with methods of its formation and use. In one embodiment, the oxide dispersion strengthened refractory-based alloy includes a refractory-based alloy comprising two or more refractory elements and forming a continuous phase and an in-situ precipitated rare earth refractory oxide comprising at least one rare earth element and at least one of the two or more refractory elements. The rare earth refractory oxide forms discrete particles within the continuous phase, and the oxide dispersion strengthened refractory-based alloy comprises 0.1 volume % to 5 volume % of the rare earth refractory oxide (e.g., 0.5 volume % to 2.5 volume % of the rare earth refractory oxide). In one embodiment, the in-situ precipitated rare earth refractory oxide has a pyrochlore structure.

In one embodiment, a method of forming an oxide dispersion strengthened refractory-based alloy is also provided. For example, the method may include forming a physical powder mixture from a refractory powder and a rare earth oxide powder; mechanically alloying the physical powder mixture to form an alloyed mixture having the rare earth oxide at least partially dissolved therein; and thereafter, consolidating the alloyed mixture to form the oxide dispersion strengthened refractory-based alloy. The refractory powder comprises at least two refractory elements, and the rare earth oxide powder comprises a rare earth oxide. The consolidating reacts the dissolved rare earth oxide with at least one of the at least two refractory elements to precipitate dispersed discrete particles therein to form the oxide dispersion strengthened refractory-based alloy. The continuous phase includes the two or more refractory elements, and the discrete precipitated particles comprise a rare earth refractory oxide.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures.
FIG. 1 is a schematic of an exemplary milling system for use in particular embodiments;
FIG. 2 is a close-up, cross-sectional, schematic view of an exemplary leading edge of an exemplary hypersonic vehicle in accordance with an embodiment of the present disclosure; and
FIG. 3 is a diagram of an exemplary method in accordance with an embodiment of the present disclosure.

### DEFINITIONS

The word "exemplary" is used herein to mean "serving as an example, instance, or illustration." Any implementation described herein as "exemplary" is not necessarily to be construed as preferred or advantageous over other implementations. Moreover, each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the terms "first," "second," and "third" may be used interchangeably to distinguish one component from another and are not intended to signify location or importance of the individual components. The singular forms "a," "an," and "the" include plural references unless the context clearly dictates otherwise.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Chemical elements are discussed in the present disclosure using their common chemical abbreviation, such as commonly found on a periodic table of elements. For example, hydrogen is represented by its common chemical abbreviation H; helium is represented by its common chemical abbreviation He; and so forth.

As used herein, "Ln" refers to a rare earth element or a mixture of rare earth elements. More specifically, the "Ln" refers to the rare earth elements of scandium (Sc), yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), or mixtures thereof.

As used herein, "refractory elements" refers to a refractory element or a mixture of refractory elements. More specifically, "refractory elements" refers to the elements of niobium (Nb), molybdenum (Mo), tantalum (Ta), tungsten (W), rhenium (Re), titanium (Ti), vanadium (V), chromium (Cr), zirconium (Zr), hafnium (Hf), ruthenium (Ru), rhodium (Rh), osmium (Os), iridium (Ir), or a mixture thereof.

As used herein, a "refractory-based alloy" refers to an alloy that includes 50 atomic percent or greater of a refractory element or a mixture of refractory elements.

As used herein, the term "hypersonic" refers generally to air speeds of about Mach 4 up to about Mach 10 or greater, such as Mach 5 and up. However, it should be appreciated that aspects of the present subject matter are not limited only to hypersonic flight, but may instead apply to applications involving other high speed vehicles, projectiles, objects, etc. The description of leading edges herein with respect to use on a hypersonic aircraft are only examples intended to facilitate the explanation of aspects of the present subject matter, and may include leading edge assemblies and other components. The present subject matter is not limited to such exemplary embodiments and applications.

### DETAILED DESCRIPTION

Reference now will be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

An oxide dispersion strengthened refractory-based alloy is generally provided, along with methods of its formation. In particular embodiments, the refractory-based alloy is a refractory-based, high entropy alloy. The oxide dispersions strengthening drives an increase in strength over the base metal solid solution strengthening whereby an initial rare earth oxide is added to a refractory metal matrix and is at least partially dissolved during a mechanical alloying process (e.g., a milling process). In particular embodiments, the mixture of the initial rare earth oxide and the refractory metal matrix is milled until mostly all of the initial rare earth oxide is dissolved therein (e.g., greater than 75% by weight, such as greater than 85% by weight) or until substantially all of the initial rare earth oxide is dissolved therein (e.g., greater than 99% by weight). Thereafter, the milled product may be subjected to a hot consolidation into an oxide dispersion strengthened refractory-based alloy and/or an oxide dispersion strengthened refractory-based alloy component. During the hot consolidation, a new rare earth refractory oxide precipitates within the metal matrix. The new rare earth refractory oxide is chemically different from the starting rare earth oxide and includes those elements from the starting oxide plus at least one additional refractory element from the refractory metal matrix. In particular, the rare earth refractory oxides have a pyrochlore structure, such as having a chemical formula: Ln₂A₂O₇ where Ln is at least one rare earth element and A is at least one refractory element.

This dispersion of these highly stable precipitated rare earth refractory oxides provides the mechanism for improved strength of the resulting alloy. Without wishing to be bound by any particular theory, it is believed that the rare earth refractory oxides act as hard pinning particles and reduce the mobility of grain boundaries and dislocations. Thus, the presence of the rare earth refractory oxide results in both grain boundary strengthening (Hall-Petch strengthening) as well as direct dispersion strengthening.

The alloying strategy for the formation of the oxide dispersion strengthened refractory-based alloys may provide a high temperature stable way to increase the strength of the alloy while preserving the required ductility. For example, the oxide dispersion strengthened refractory-based alloy may be utilized as a hypersonic vehicle leading edge. By utilizing a metal leading edge, a cost reduction over the currently used composites could be achieved, along with an increase in the geometric stability.

The refractory-based alloy includes two or more refractory elements (e.g., two or more of niobium, molybdenum, tantalum, tungsten, rhenium, titanium, vanadium, chromium, zirconium, hafnium, ruthenium, rhodium, osmium, or iridium). In particular embodiments, hafnium is included in the refractory-based alloy. Additionally or alternatively, tantalum is included in the refractory-based alloy. The refractory-based alloy may include a single phase or multiple phases. In one particular embodiment, the refractory-based alloy may form a single phase, such as a high entropy alloy (HEA) having a single phase crystal structure that is face-centered cubic (FCC), body-centered cubic (BCC), hexagonal close-packed (HCP), or orthorhombic.

In the formation of the refractory-based alloy, the refractory elements may be provided as individual refractory element powders formed from substantially pure refractory elements (e.g., greater than 99% purity by weight, such as greater than 99.9% purity by weight). That is, each refractory element may be provided as its own refractory element powder. In such an embodiment, the relative amounts of each refractory element may be more easily controlled in the resulting refractory-based alloy. However, in other embodiments, the refractory elements may be provided as an alloy powder.

The relative amounts of refractory elements in the refractory-based alloy may vary depending on the application of the resulting component. However, the refractory-based alloy has 50 atomic % or greater in most embodiments so as to ensure the desired high temperature properties. The refractory-based alloy may have greater than 50 atomic % of the mixture of refractory elements (e.g., 50 atomic % to 99.9 atomic %), such as 75 atomic % of refractory elements or greater (e.g., 75 atomic % to 99 atomic %). In particular embodiments, the amount of refractory elements is 90 atomic % or greater to ensure the desired properties in the refractory-based alloy. For example, the refractory-based alloy is formed from 90 atomic % of refractory elements or greater (e.g., 90 atomic % to 99.9 atomic %), such as 95 atomic % of refractory elements or greater (e.g., 95 atomic % to 99 atomic %).

In one embodiment, the oxide dispersion strengthened refractory-based alloy may be formed of two or more refractory elements, the rare earth element(s) and oxygen, without any other elements present other than unavoidable impurities. That is, the oxide dispersion strengthened refractory-based alloy may consist essentially of two or more refractory elements, the rare earth element(s), and oxygen. In these embodiments, the characteristics of the oxide dispersion strengthened refractory-based alloy may be fully realized.

In other embodiments, non-refractory metal elements may be added to the refractory-based alloy, either intentionally or as an accounted for contaminate that may be introduced during processing. For example, non-refractory metal elements may include iron, cobalt, nickel, aluminum, or mixtures thereof. When present, the non-refractory metal elements may be included in an amount of 25 atomic % or less (e.g., in an amount of 10 atomic % or less, such as in an amount of 0.1 atomic % to 5 atomic %). For example, such non-refractory metal elements may be introduced during processing via the milling process due to the use of steel components therein, particularly iron. Additionally or alternatively, non-metal alloying elements may be included in the refractory-based alloy. For example, non-metal alloying elements may include carbon, nitrogen, boron, or mixtures thereof. When present, the non-metal alloying elements may be included in an amount of 5 atomic % or less (e.g., in an amount of 2 atomic % or less, such as 0.1 atomic % to 2 atomic %).

As stated, a rare earth refractory oxide is present in the oxide dispersion strengthened refractory-based alloy. The rare earth refractory oxide is initially provided as a rare earth oxide in a powder form (i.e., a rare earth oxide powder). For example, the rare earth oxide powder may include the rare earth element and oxygen (e.g., only the rare earth element and oxygen), such as in the form of LnₓO_{y} where x is the number of atoms of Ln in the rare earth oxide (e.g., 1, 2, 4, or 6) and y is the number of atoms of oxygen in the rare earth oxide (e.g., 2, 3, 7, 11). In particular embodiments, the rare earth oxide powder may include, but is not limited to, scandium oxide (Sc₂O₃), yttrium oxide (Y₂O₃), lanthanum oxide (La₂O₃), cerium oxide (CeO₂), praseodymium oxide (Pr₆O₁₁), neodymium oxide (Nd₂O₃), samarium oxide (Sm₂O₃), europium oxide (Eu₂O₃), gadolinium oxide (Gd₂O₃), terbium oxide (Tb₄O₇), dysprosium oxide (Dy₂O₃), holmium oxide (Ho₂O₃), erbium oxide (Er₂O₃), thulium oxide (Tm₂O₃), ytterbium oxide (Yb₂O₃), lutetium oxide (Lu₂O₃), or mixtures thereof.

The relative amount of rare earth refractory oxide may be controlled as desired with the amount of rare earth oxide powder added to the powder mixture. For example, the rare earth oxide powder may be included in the oxide dispersion strengthened refractory-based alloy in an amount of 0.1% by volume to 5% by volume, such as 0.5% by volume to 4.5% by volume (e.g., 0.5% by volume to 2.5% by volume). Without wishing to be bound by any particular theory, it is believed that the inclusion of the rare earth refractory oxide in the oxide dispersion strengthened refractory-based alloy serves to strengthen the refractory-based alloy, even at relatively low amounts (e.g., 1 volume %, or even 0.1 volume %). However, including too much of the rare earth refractory oxide in the oxide dispersion strengthened refractory-based alloy (e.g., greater than 5 volume %) may begin to change other properties of the oxide dispersion strengthened refractory-based alloy. Thus, adding too much of the rare earth refractory oxide in the oxide dispersion strengthened refractory-based alloy may be undesirable.

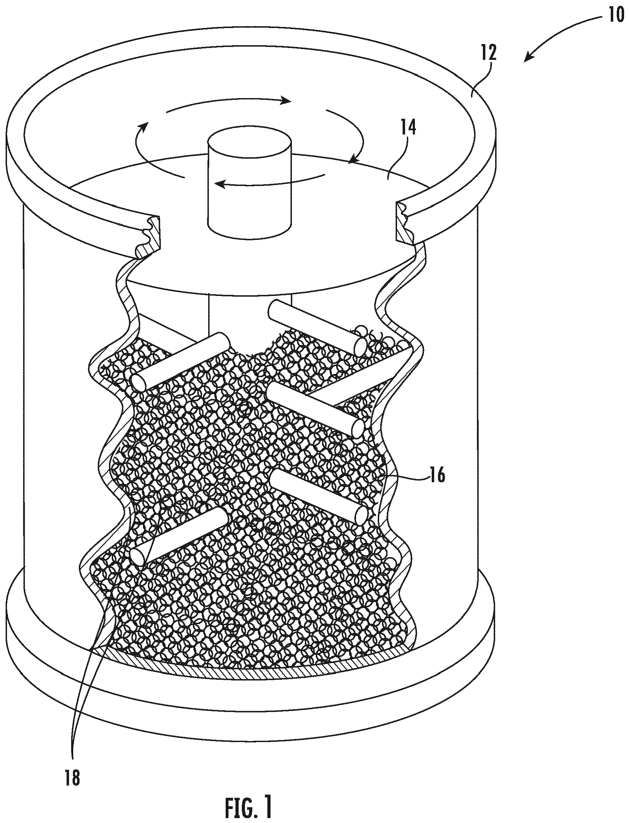

Generally, the powder mixture is mechanically alloyed to form an alloyed mixture. Mechanical alloying may, in one particular embodiment, be a milling process, such as milling with the use of the powder mixture and milling media to enhance the transfer of kinetic energy to the powder mixture. In one embodiment, a powder mixing system 10 is provided as shown in FIG. 1. The powder mixing system 10 may be any powder mixing, or powder processing equipment. In one embodiment, the powder mixing system 10 used herein is a mechanical alloying equipment, such as a mill. Non-limiting examples of the mill will include an attritor mill and ball-mill. In one embodiment, the powder mixing system 10 is a high-energy attritor mill. Mechanical alloying is a solid-state powder processing technique involving the repeated working of powder particles in a high-energy mill. The powder particles may be ground, cold-welded, and fractured during the mechanical alloying process. A high-energy ball mill may be used for processing powder particles that may have to undergo the mechanical alloying process.

The powder mixing system 10 may include a cylindrical or spherical container 12 having a processing volume 14 that is used for milling powder materials such as for example metallic particles, and ceramic materials. In a normal milling process, the container is partially filled with the materials to be milled and some milling medium and normally rotated in one, two, three, or more axes. The milling process results in the repeated cold welding and fracturing of powder particles. Depending on the materials to be milled, different milling media 16 may be used. The "milling media" as used herein is a plurality of media, such as balls, rods, or beads that can be used to mill and cold-weld the particles. In general, the milling media 16 may include ceramic balls, flint pebbles and metallic balls. Key properties of milling media 16 include its size, density, hardness, and composition.

The materials to be processed inside the processing volume 14 of the container are referred to as "feedstock" 18, which is provided in the form of the powders as discussed above. That is, the feedstock 18 used herein includes a powder mixture formed from the refractory powder (e.g., two or more elemental refractory powders and/or a refractory alloy powder) and the rare earth oxide powder(s). The processing volume 14 is the total volume available for milling enclosed by the container 12 walls.

Different factors such as for example, extent of filling of the mill, ratio of the milling media 16 verses feedstock 18, the toughness and smoothness of the milling media 16, speed of the mill rotation, and time of milling, have an effect on the final size and composition of the material that are processed in the mill. In the mechanical alloying process, the mill is used for fracturing and cold welding of the materials, thereby producing an alloyed powder from the starting powder mixture.

The feedstock 18 in the processing volume of the container may have to be milled with high speed and energy to get the desired result after milling. Different factors that may influence the milling energy and the final milled materials include strength, hardness, size, speed, and ratio of the milling media 16 with respect to the feedstock 18 material, and overall time and temperature of milling. The milling media 16 may be desired to have higher strength and hardness than the overall feedstock 18 material.

The feedstock 18 may mechanically milled at a milling temperature of 20 °C to 150 °C, such as 20 °C to 50 °C. In one embodiment, the container 12 may be cooled to keep the milling temperature relatively low. For example, the container 12 may have cooled walls.

In one embodiment, the milling media 16 may comprise balls, beads, or rods. The milling media 16 may have an interior portion and a surface portion with the same or different compositions. In one particular embodiment, the surface portion of the milling media 16 has a refractory alloy composition, such a refractory alloy composition similar to that of the refractory powder of the feedstock 18. In such an embodiment, the elemental composition can be more precisely controlled in the resulting refractory alloy, since impurities from the milling media may be minimized.

Mechanical alloying is generally performed in an inert environment (e.g., comprising argon, nitrogen, etc.) and/or under a vacuum to avoid introduction of unwanted impurities. Without wishing to be bound by any particular theory, it is believed that when milling under an inert gas environment, the environmental gas may become incorporated and trapped in the milled material as an impurity. Upon high temperature exposure, these gas bubbles expand, causing a porous structure. This thermally induced porosity may reduce the mechanical properties of the material. Therefore, in one embodiment, the feedstock 18 is milled under a rough vacuum, rather than in an inert gas environment (e.g., after purging with an inert gas environment). A "rough vacuum" as used herein indicates an environmental pressure less than the atmospheric pressure in the process volume of the container. In one embodiment, the pressure inside the container in the processing volume is less than 10⁻⁴ atmosphere. In one embodiment, the pressure is less than 10⁻⁵ atmosphere. This low pressure is maintained in the process volume throughout the milling process.

After mechanically alloying the powder mixture, the resulting alloyed mixture may be consolidated to form the oxide dispersion strengthened refractory-based alloy. For instance, the alloyed mixture may be subjected to a high temperature consolidation resulting in an alloy matrix having some dispersed microfeatures. As used herein, the term "microfeatures" means discrete particles of matter having a largest diameter of 10 micrometers (µm) or less, such as 0.001 µm to 5 µm (e.g., 0.001 µm to 2 µm, such as 0.001 µm to 1 µm). The microfeatures used herein are typically in-situ formed by the dissolution of the starting rare earth oxide and precipitation of the rare earth refractory oxide as micrometer-sized clusters that can serve to pin the alloy structure, thus providing enhanced mechanical properties (e.g., strength).

Consolidation may be performed by heating the alloyed mixture at a consolidation temperature that is 50% of the melting point of the refractory-based alloy or greater (e.g., a consolidation temperature that is 50% to 90% of the melting point of the refractory-based alloy).

In one particular embodiment, consolidation of the alloyed mixture reacts the rare earth oxide with at least one of the at least two refractory elements to form a rare earth refractory oxide as discrete particles (e.g., the microparticles) within the refractory-based alloy matrix, such as within a continuous phase of the refractory-based alloy.

The rare earth refractory oxide includes, in most embodiments, a pyrochlore structure. For instance, the rare earth refractory oxide having a pyrochlore structure may have a chemical formula of Ln₂A₂O₇ where Ln is the at least one rare earth element and A is at least one refractory element. For example, the at least one rare earth element may include scandium, yttrium, lanthanum, cerium, praseodymium, neodymium, promethium, samarium, europium, gadolinium, terbium, dysprosium, holmium, erbium, thulium, ytterbium, lutetium, or mixtures thereof.

In particular embodiments, hafnium is included in the two or more refractory elements such that the rare earth refractory oxide having a pyrochlore structure has a chemical formula of Ln₂Hf₂O₇ where Ln is the at least one rare earth element, such as Y₂Hf₂O₇. Additionally or alternatively, tantalum is included in the two or more refractory elements.

As stated above, the oxide dispersion strengthened refractory-based alloy is particularly useful as a high strength component, such as a leading edge of a hypersonic aircraft. Notably, high speed vehicles, such as a hypersonic aircraft, typically experience extremely high temperatures and thermal gradients during high speed or hypersonic operation. The temperature gradients that are caused by the high heat flux are often a more severe problem than the temperature itself. For example, the thermal conductivity of the structural material, in combination with the heat flux, sets the temperature gradient within the material, and at high heat loads this gradient leads to mechanical stresses that cause plastic deformation or fracture of the material. The heat load to the structural material should be reduced to maintain the structural integrity of the components.

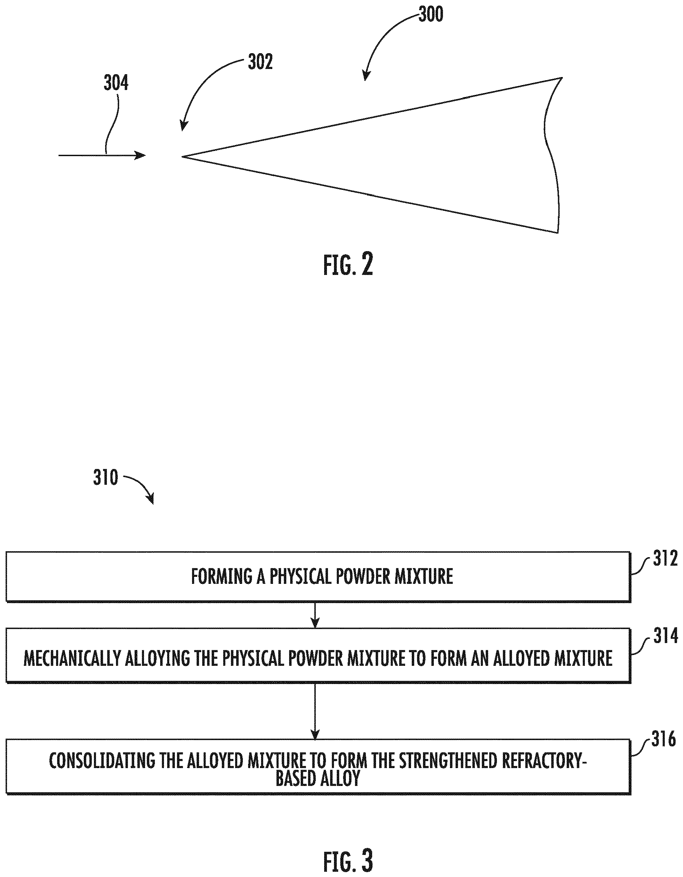

As explained above, the leading edges of such high speed vehicles often experience the highest thermal loading. FIG. 2 shows an exemplary component 300 of a hypersonic vehicle with a leading edge 302. Generally, the component 300 may be a single component or may include a plurality of leading edge assemblies (e.g., identified generally herein by component 300) which experience high thermal loads during hypersonic flight. In this regard, the leading edge 302 may be provided on a forward end of the aircraft wings, the nose cone, the vertical stabilizer, the engine cowls of the propulsion engines, or other leading edges or surfaces of the hypersonic aircraft.

Notably, it is typically desirable to for the leading edge 302 of the component 300 to have a contoured point 304 in order to reduce drag on the hypersonic vehicle. It should be appreciated that the leading edge 302 illustrated herein is a simplified cross section illustration of exemplary leading edges. The size, configuration, geometry, and application of such leading edge technologies may vary while remaining within the scope of the present subject matter. At least a portion, if not its entirety, of the component 300 may be formed from oxide dispersion strengthened refractory-based alloy discussed herein.

FIG. 3 shows an exemplary method 310 of forming a oxide dispersion strengthened refractory-based alloy. The method 310 may include any of the features described above. For example, a physical powder mixture may optionally be formed at 312, such as from at least two individual refractory element powders and a rare earth oxide powder(s). Then, the physical powder mixture may be mechanically alloyed to form an alloyed mixture at 314 (e.g., such that dissolution of the starting oxide may occur), such as utilizing the system 10 described above. Then, the alloyed mixture may be consolidated to form the oxide dispersion strengthened refractory-based alloy at 316 (e.g., such that reaction and precipitation may occur), such as described above, which includes the pyrochlore oxide.

Further aspects of the invention are provided by the subject matter of the following clauses:
1. An oxide dispersion strengthened refractory-based alloy, comprising: a refractory-based alloy comprising two or more refractory elements and forming a continuous phase; and an in-situ precipitated rare earth refractory oxide comprising at least one rare earth element and at least one of the two or more refractory elements, wherein the rare earth refractory oxide forms discrete particles within the continuous phase, and wherein the oxide dispersion strengthened refractory-based alloy comprises 0.1 volume % to 5 volume % of the rare earth refractory oxide.
2. The oxide dispersion strengthened refractory-based alloy of any preceding clause, wherein the oxide dispersion strengthened refractory-based alloy comprises 0.5 volume % to 2.5 volume % of the rare earth refractory oxide.
3. The oxide dispersion strengthened refractory-based alloy of any preceding clause, wherein the in-situ precipitated rare earth refractory oxide has a pyrochlore structure.
4. The oxide dispersion strengthened refractory-based alloy of any preceding clause, wherein the in-situ precipitated rare earth refractory oxide has a chemical formula of Ln₂A₂O₇ where Ln is the at least one rare earth element and A is the at least one of the two or more refractory elements, wherein the at least one rare earth element comprises scandium, yttrium, lanthanum, cerium, praseodymium, neodymium, promethium, samarium, europium, gadolinium, terbium, dysprosium, holmium, erbium, thulium, ytterbium, lutetium, or mixtures thereof.
5. The oxide dispersion strengthened refractory-based alloy of any preceding clause, wherein the refractory-based alloy is a high entropy alloy.
6. The oxide dispersion strengthened refractory-based alloy of any preceding clause, wherein the two or more refractory elements comprise hafnium and wherein the at least one of the two or more refractory elements comprises hafnium.
7. The oxide dispersion strengthened refractory-based alloy of any preceding clause, wherein rare earth refractory oxide comprises Ln₂Hf₂O₇.
8. The oxide dispersion strengthened refractory-based alloy of any preceding clause, wherein the discrete particles have an average diameter of 0.001 µm to 5 µm.
9. The oxide dispersion strengthened refractory-based alloy of any preceding clause, wherein the refractory-based alloy comprises greater than 75 atomic % of refractory elements.
10. The oxide dispersion strengthened refractory-based alloy of any preceding clause, wherein the refractory-based alloy comprises greater than 95 atomic % of refractory elements.
11. A leading edge for a hypersonic vehicle, the leading edge comprising the oxide dispersion strengthened refractory-based alloy of any preceding clause.
12. A method of forming an oxide dispersion strengthened refractory-based alloy, the method comprising: forming a physical powder mixture from a refractory powder and a rare earth oxide powder, wherein the refractory powder comprises at least two refractory elements, and wherein the rare earth oxide powder comprises a rare earth oxide; mechanically alloying the physical powder mixture to form an alloyed mixture having the rare earth oxide at least partially dissolved therein; and thereafter, consolidating the alloyed mixture to form the oxide dispersion strengthened refractory-based alloy, wherein consolidating reacts the dissolved rare earth oxide with at least one of the at least two refractory elements to precipitate dispersed discrete particles therein to form the oxide dispersion strengthened refractory-based alloy, wherein the continuous phase includes the two or more refractory elements, and wherein the discrete precipitated particles comprise a rare earth refractory oxide.
13. The method of any preceding clause, wherein the rare earth refractory oxide has a pyrochlore structure.
14. The method of any preceding clause, wherein the rare earth oxide powder comprises 0.1% by volume to 5% by volume of the powder mixture.
15. The method of any preceding clause, and wherein the oxide dispersion strengthened refractory-based alloy comprises 0.5% by volume to 2.5% by volume of the rare earth refractory oxide.
16. The method of any preceding clause, wherein the rare earth refractory oxide having a pyrochlore structure has a chemical formula of Ln₂A₂O₇ where Ln is the at least one rare earth element and A is the at least one of the two or more refractory elements, wherein the at least one rare earth element comprises scandium, yttrium, lanthanum, cerium, praseodymium, neodymium, promethium, samarium, europium, gadolinium, terbium, dysprosium, holmium, erbium, thulium, ytterbium, lutetium, or mixtures thereof.
17. The method of any preceding clause, wherein hafnium is included in the two or more refractory elements such that the rare earth refractory oxide having a pyrochlore structure has a chemical formula of Ln₂Hf₂O₇ where Ln is the at least one rare earth element.
18. The method of any preceding clause, wherein mechanically alloying the powder mixture comprises: milling the powder mixture until greater than 75% by weight of all of the starting rare earth oxide is dissolved.
19a. The method of any preceding clause, wherein mechanically alloying the powder mixture comprises: milling the powder mixture until greater than 85% by weight of all of the starting rare earth oxide is dissolved.
19b. The method of any preceding clause, wherein mechanically alloying the powder mixture comprises: milling the powder mixture until greater than 99% by weight of all of the starting rare earth oxide is dissolved.
20. The method of any preceding clause, wherein milling the powder mixture is performed in an inert atmosphere or under vacuum,
21. The method of any preceding clause, wherein milling is performed a temperature of 20 °C to 150 °C.
22. The method of any preceding clause, wherein consolidating the powder mixture comprises: heating the alloyed mixture at a consolidation temperature that is 50% of the melting point of the refractory-based alloy or greater.
23. The method of any preceding clause, wherein the consolidation temperature is 50% to 90% of the melting point of the refractory-based alloy.
24. The method of any preceding clause, wherein each refractory element in the refractory powder is supplied to the physical powder mixture via a substantially pure refractory element powder.
25. The method of any preceding clause, wherein each refractory element in the refractory powder is supplied to the physical powder mixture via a refractory alloy powder.

### EXAMPLE 1

A refractory metal matrix having a composition of 76.3 Hf 26.7 Ta (at%) was mechanically alloyed with Y₂O₃ under an inert atmosphere of argon. These alloy constituents were provided in the form of three powders: a first powder of Hf, a second powder of Ta, and a third powder of Y₂O₃. These powders were added in the relative atomic amounts to form the desired alloy. The Y₂O₃ was varied from 0.5 wt% to 4.8 wt% to form multiple alloys having varied amounts of rare earth oxides added (0% as a comparative example, 0.5 wt%, 1.0 wt, 2.0 wt%, and 4.8 wt%). XRD showed the presence of Y₂O₃ in the physical mixture (above 1% by weight) and the absence of Y₂O₃ after mechanical alloying suggesting the Y₂O₃ was dissolved during mechanical alloying.

Following consolidation, a new oxide was found: Y₂Hf₂O₇ and no Y₂O₃ was seen. Thus, a new oxide was precipitated in-situ during hot consolidation and it is different than the starting Y₂O₃. TEM analysis supported this result with selected area diffraction on the precipitated oxides. The diffraction patterns matched Y₂Hf₂O₇.

The microhardness (HRC) improved significantly with the addition of the rare earth refractory oxide when compared to the comparative example and increased in hardness with higher relative amounts of the rare earth refractory oxide.

### EXAMPLE 2

A refractory metal matrix having a composition of HfNbTaTiZr (equal at% for each constituent) was mechanically alloyed with 2 wt% Y₂O₃ under an inert atmosphere of argon. These alloy constituents were provided in the form of six powders: a first powder of Hf, a second powder of Nb, a third powder of Ta, a fourth powder of Ti, and a fifth powder of Zr, and a sixth powder of Y₂O₃. These powders were added in the relative atomic amounts to form the desired alloy. XRD showed the presence of Y₂O₃ in the physical mixture and the absence of Y₂O₃ after mechanical alloying suggesting the Y₂O₃ was dissolved during mechanical alloying.

Again, following consolidation, a new oxide was found: Y₂Hf₂O₇ and no Y₂O₃ was seen. Thus, a new oxide was precipitated in-situ during hot consolidation and it is different than the starting Y₂O₃. TEM analysis supported this result with selected area diffraction on the precipitated oxides. The diffraction patterns matched Y₂Hf₂O₇. Without wishing to be bound by any particular theory, it is believed that other rare earth oxides are formed, but in a smaller amount, than Y₂Hf₂O₇. However, Y₂Hf₂O₇ is a primary constituent due to the relatively low Gibbs free energy of formation compared to the other potential oxides that could be formed.

The microhardness (HRC) improved significantly with the precipitation of the rare earth refractory oxide when compared to the comparative example.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. An oxide dispersion strengthened refractory-based alloy, comprising:
a refractory-based alloy comprising two or more refractory elements and forming a continuous phase; and
an in-situ precipitated rare earth refractory oxide comprising at least one rare earth element and at least one of the two or more refractory elements, wherein the rare earth refractory oxide forms discrete particles within the continuous phase, and wherein the oxide dispersion strengthened refractory-based alloy comprises 0.1 volume % to 5 volume % of the rare earth refractory oxide.

2. The oxide dispersion strengthened refractory-based alloy of claim 1, wherein the oxide dispersion strengthened refractory-based alloy comprises 0.5 volume % to 2.5 volume % of the rare earth refractory oxide.

3. The oxide dispersion strengthened refractory-based alloy of any preceding claim, wherein the in-situ precipitated rare earth refractory oxide has a pyrochlore structure.

4. The oxide dispersion strengthened refractory-based alloy of any preceding claim, wherein the in-situ precipitated rare earth refractory oxide has a chemical formula of
Ln₂A₂O₇
where Ln is the at least one rare earth element and A is the at least one of the two or more refractory elements, wherein the at least one rare earth element comprises scandium, yttrium, lanthanum, cerium, praseodymium, neodymium, promethium, samarium, europium, gadolinium, terbium, dysprosium, holmium, erbium, thulium, ytterbium, lutetium, or mixtures thereof.

5. The oxide dispersion strengthened refractory-based alloy of any preceding claim, wherein the refractory-based alloy is a high entropy alloy.

6. The oxide dispersion strengthened refractory-based alloy of any preceding claim, wherein rare earth refractory oxide comprises Ln₂Hf₂O₇.

7. The oxide dispersion strengthened refractory-based alloy of any preceding claim, wherein the discrete particles have an average diameter of 0.001 µm to 5 µm.

8. The oxide dispersion strengthened refractory-based alloy of any preceding claim, wherein the refractory-based alloy comprises greater than 75 atomic % of refractory elements.

9. The oxide dispersion strengthened refractory-based alloy of any preceding claim, wherein the refractory-based alloy comprises greater than 95 atomic % of refractory elements.

10. A leading edge for a hypersonic vehicle, the leading edge comprising the oxide dispersion strengthened refractory-based alloy of any preceding claim.

11. A method of forming an oxide dispersion strengthened refractory-based alloy, the method comprising:
forming a physical powder mixture from a refractory powder and a rare earth oxide powder, wherein the refractory powder comprises at least two refractory elements, and wherein the rare earth oxide powder comprises a rare earth oxide;
mechanically alloying the physical powder mixture to form an alloyed mixture having the rare earth oxide at least partially dissolved therein; and
thereafter, consolidating the alloyed mixture to form the oxide dispersion strengthened refractory-based alloy, wherein consolidating reacts the dissolved rare earth oxide with at least one of the at least two refractory elements to precipitate dispersed discrete particles therein to form the oxide dispersion strengthened refractory-based alloy, wherein the continuous phase includes the two or more refractory elements, and wherein the discrete precipitated particles comprise a rare earth refractory oxide.

12. The method of claim 11, wherein the rare earth refractory oxide has a pyrochlore structure, wherein the rare earth oxide powder comprises 0.1% by volume to 5% by volume of the powder mixture.

13. The method of claim 11 or 12, wherein the rare earth refractory oxide having a pyrochlore structure has a chemical formula of
Ln₂A₂O₇
where Ln is the at least one rare earth element and A is the at least one of the two or more refractory elements, wherein the at least one rare earth element comprises scandium, yttrium, lanthanum, cerium, praseodymium, neodymium, promethium, samarium, europium, gadolinium, terbium, dysprosium, holmium, erbium, thulium, ytterbium, lutetium, or mixtures thereof.

14. The method of claim 13, wherein hafnium is included in the two or more refractory elements such that the rare earth refractory oxide having a pyrochlore structure has a chemical formula of Ln₂Hf₂O₇ where Ln is the at least one rare earth element.

15. The method of any of claims 11 to 14, wherein mechanically alloying the powder mixture comprises:
milling the powder mixture until greater than 75% by weight of all of the starting rare earth oxide is dissolved, wherein milling the powder mixture is performed in an inert atmosphere or under vacuum, and wherein milling is performed a temperature of 20 °C to 150 °C.
